# EUROPEAN PATENT SPECIFICATION

(11) **EP 4 556 361 B1**
(45) Date of publication and mention of the grant of the patent: **04.03.2026**
(21) Application number: 23838386.3
(22) Date of filing: 17.01.2023
(51) Int. Cl.: B63B 35/44, B63B 43/04, F03D 13/25, B63B 1/04

(54) **FLOATING-TYPE STAND-COLUMN TURBULENT FLOW STRUCTURE, FLOATING-TYPE STAND COLUMN AND FLOATING-TYPE FAN**
TURBULENTE STRÖMUNGSSTRUKTUR EINER SCHWIMMENDEN STANDSÄULE, SCHWIMMENDE STANDSÄULE UND SCHWIMMENDER LÜFTER
STRUCTURE D'ÉCOULEMENT TURBULENT DE COLONNE DE SUPPORT DE TYPE FLOTTANT, COLONNE DE SUPPORT DE TYPE FLOTTANT ET VENTILATEUR DE TYPE FLOTTANT

(30) Priority: 11.07.2022 CN 202210808636
(43) Date of publication of application: 21.05.2025
(73) Proprietor: Huaneng Clean Energy Research Institute, Beijing (CN)
(72) Inventor: ZHOU, Yiming, Beijing 102209 (CN); LIU, Xin, Beijing 102209 (CN); GUO, Yutong, Beijing 102209 (CN); CHEN, Jianjun, Beijing 102209 (CN); GUO, Xiaohui, Beijing102209 (CN)
(74) Representative: Metida
(86) International application number: PCT/CN2023/072524
(87) International publication number: WO 2024/011884

(56) References cited:
- EP-A1- 3 756 981
- WO-A1-2016/147245
- WO-A1-2019/222825
- CN-A- 102 720 209
- CN-A- 112 519 952
- CN-A- 114 526 201
- CN-A- 115 092 336
- CN-U- 217 456 290
- US-A1- 2005 201 832

## Description

### TECHNICAL FIELD

The disclosure relates to the technical field of spoiler structures, in particular to a floating column spoiler structure, a floating column, and a floating wind turbine.

### BACKGROUND

At present, offshore wind turbine is usually equipped with floating platform to support floating wind turbine, and the bottom of the floating platform is usually equipped with cylindrical floating column. When the ocean current flows through the floating column, karman vortex bits often occur around the floating column, which causes vortex-induced vibration of the floating column, leading to the phenomenon that the floating wind turbine often have too large inclination angle or too large roll and pitch angle, which reduces the stability of the floating wind turbine and affects the smooth power output of the floating wind turbine.

Therefore, how to improve the stability of floating wind turbine is a technical problem that needs to be solved by those skilled in this field at present.

In a reference document D1 (WO2019/222825A1), a floating offshore structure comprises an adjustably buoyant hull having a central axis, a first end, and a second end opposite the first end; a plurality of circumferentially-spaced hydrodynamic dampers disposed about the hull and axially positioned between the first end and the second end of the hull, wherein 5 the hydrodynamic dampers are radially spaced from the hull.

### SUMMARY

In view of this, the purpose of the disclosure is to provide a floating column spoiler structure to improve the stability of a floating wind turbine.

In order to achieve the above purpose, the disclosure provides the following technical scheme:
a spoiler structure for a floating column is provided, which includes:
multiple spoiler plates;
lifting and unfolding assemblies suitable to connect each of the spoiler plates and a column; wherein each of the lifting and unfolding assemblies includes a first connecting rod, a second connecting rod, a first gear and a second gear; wherein a first end of the first connecting rod is rotatably connected with a first end of the second connecting rod, and each of the spoiler plates is arranged at the first end of the first connecting rod and the first end of the second connecting rod; wherein a second end of the first connecting rod is rotatably connected with the first gear, and a second end of the second connecting rod is rotatably connected with the second gear; wherein the first gear and the second gear are suitable to be sequentially arranged on an outer circumferential wall of the column from top to bottom along an axial direction of the column, and wherein the structure comprises further lifting gear teeth suitable to be provided on the outer circumferential wall of the column and capable of meshing with the first gear and the second gear.

Optionally, in the spoiler structure for a floating column, each of the spoiler plates is rotatably arranged at the first end of the first connecting rod and the first end of the second connecting rod.

Optionally, in the spoiler structure for a floating column, the first end of the first connecting rod and the first end of the second connecting rod are connected by a ball hinge.

Optionally, in the spoiler structure for a floating column, each of the spoiler plates includes spoiler nets or spoiler nails.

Optionally, in the spoiler structure for a floating column, a number of the lifting and unfolding assemblies corresponding to each of the spoiler plates is three, and the lifting and unfolding assemblies includes a first lifting and unfolding assembly, a second lifting and unfolding assembly and a third lifting and unfolding assembly, and connection positions of the first lifting and unfolding assembly, the second lifting and unfolding assembly and the third lifting and unfolding assembly with corresponding one of the spoiler plates are distributed in a triangle shape.

Optionally, spoiler structure for a floating column, the lifting gear teeth are directly arranged on the outer circumferential wall of the column, or toothed belts are arranged on the outer circumferential wall of the column, and the lifting gear teeth are located on the toothed belts.

Optionally, in the spoiler structure for a floating column, the first gear and the second gear are respectively arranged on the outer circumferential wall of the column through a first gear mounting piece and a second gear mounting piece, and the first gear mounting piece and the second gear mounting piece are slidably connected to the outer circumferential wall of the column.

Optionally, in the spoiler structure for a floating column, further including a central control system, a water body flow velocity monitoring system and a wind and wave environment monitoring system, as well as a first pushing piece for pushing the second end of the first connecting rod to lift and a second pushing piece for pushing the second end of the second connecting rod to lift, where the central control system is capable of transmitting signals with the water body flow velocity monitoring system, the wind and wave environment monitoring system, the first pushing piece and the second pushing piece.

A floating column, including a spoiler structure for a floating column as described above.

A floating wind turbine, including a spoiler structure for a floating column as described above.

When the floating column spoiler structure provided by this disclosure is used, because the first end of the first connecting rod and the first end of the second connecting rod are rotatably connected, the second end of the first connecting rod is rotatably connected with the first gear and the second end of the second connecting rod is rotatably connected with the second gear, which are sequentially arranged on the outer circumferential wall of the column from top to bottom along the axial direction of the column, and the outer circumferential wall of the column is provided with lifting gear teeth capable of meshing with the first gear and the second gear; Therefore, the distance between the first gear and the second gear can be adjusted by moving at least one of the first gear and the second gear along the axial direction of the column, so that the distance between the second end of the first connecting rod and the second end of the second connecting rod can be adjusted, so that the distance between the first end of the first connecting rod and the first end of the second connecting rod and the outer circumferential wall of the column can be adjusted, and the distance between the spoiler arranged at the first end of the first connecting rod and the first end of the second connecting rod and the outer circumferential wall of the column can be increased or decreased. Therefore, the floating column spoiler structure provided by the invention has the following beneficial effects.

When the floating column spoiler structure provided by this disclosure is used, because the first end of the first connecting rod and the first end of the second connecting rod are rotatably connected, the second end of the first connecting rod is rotatably connected with the first gear and the second end of the second connecting rod is rotatably connected with the second gear, the first gear and the second gear are sequentially arranged on an outer circumferential wall of the column from top to bottom along an axial direction of the column, and the outer circumferential wall of the column is provided with lifting gear teeth being capable of meshing with the first gear and the second gear. Therefore, the distance between the first gear and the second gear can be adjusted by moving at least one of the first gear and the second gear along the axial direction of the column, so that the distance between the second end of the first connecting rod and the second end of the second connecting rod can be adjusted, so that the distance between the first end of the first connecting rod and the first end of the second connecting rod and the outer circumferential wall of the column can be adjusted, so that the distance between the spoiler plate arranged at the first end of the first connecting rod and the first end of the second connecting rod and the outer circumferential wall of the column can be increased or decreased. Therefore, the floating column spoiler structure provided by the disclosure has the following beneficial effects:
1. when the seawater velocity is high, at least one of the first gear and the second gear is first moved to reduce the distance between the first end of the first connecting rod and the first end of the second connecting rod and the column, and the spoiler plate is retracted, and then both the first gear and the second gear are raised along the lifting gear teeth, so that multiple spoiler plates are raised to a preset spoiler position, and then at least one of the first gear and the second gear is moved. The distance between the first end of the first connecting rod and the first end of the second connecting rod and the outer circumferential wall of the column is increased, so that the distance between the spoiler plate and the outer circumferential wall of the column is increased, and the unfolding function of the spoiler plate is realized; the karman vortex bits around the column are reduced through multiple unfolded spoiler plates, so that the vortex-induced vibration of the column is reduced, thereby reducing the inclination angle, the rolling angle and the pitching angle of the floating wind turbine, improving the stability of the floating wind turbine and enabling the power of the floating wind turbine to be stably output;
2. when the wind and waves are heavy, firstly, by moving at least one of the first gear and the second gear, the distances between the first end of the first connecting rod and the first end of the second connecting rod and the column are reduced, and the spoiler plates are retracted; then, both the first gear and the second gear are lowered along the lifting gear teeth, so that multiple spoiler plates are lowered to preset sagging positions, and the center of gravity of the floating column is lowered, so that the center of gravity of the whole floating platform is lowered; and then, at least one of the first gear and the second gear is moved, the distance between the first end of the first connecting rod and the first end of the second connecting rod and the outer circumferential wall of the column is increased, so that the distance between the spoiler plate and the outer circumferential wall of the column is increased, the spoiler plate is unfolded at a preset sagging position, the damping of the floating column is increased, the stability of the whole floating wind turbine is improved, and the power of the floating wind turbine is stably output;
3. when in a calm sea, at least one of the first gear and the second gear is moved to reduce the distance between the first end of the first connecting rod and the first end of the second connecting rod and the outer circumferential wall of the column, thereby reducing the distance between the spoiler plate and the outer circumferential wall of the column, and the spoiler plate is retracted to reduce the hydrodynamic force.

### BRIEF DESCRIPTION OF THE DRAWINGS

In order to more clearly explain the embodiment of the disclosure or the technical scheme in the prior art, the drawings needed to be used in the description of the embodiment or the prior art will be briefly introduced below. Obviously, the drawings in the following description are only some embodiments of the disclosure, and for ordinary skilled in this field, other drawings can be obtained according to these drawings without creative efforts.
FIG. 1 is a schematic structural diagram of a floating column spoiler structure when unfolded according to an embodiment of the disclosure;
FIG. 2 is a schematic structural diagram of the floating column spoiler structure when retracted according to an embodiment of the disclosure;
FIG. 3 is a schematic structural diagram of the floating column spoiler structure when it rises to the preset spoiler position and the spoiler plate is retracted according to an embodiment of the disclosure;
FIG. 4 is a schematic structural diagram of the floating column spoiler structure when it rises to the preset spoiler position and the spoiler plate is unfolded according to an embodiment of the disclosure;
FIG. 5 is a schematic structural diagram of the floating column spoiler structure when the spoiler plate is retracted before descending according to an embodiment of the disclosure;
FIG. 6 is a schematic structural diagram of the floating column spoiler structure when it descends to a preset sagging position and the spoiler plate is unfolded according to an embodiment of the disclosure;
FIG. 7 is a schematic structural diagram of the floating column spoiler structure with spoiler nets according to an embodiment of the disclosure;
FIG. 8 is a schematic structural diagram of the floating column spoiler structure with spoiler nails according to an embodiment of the disclosure; and
FIG. 9 is a schematic structural diagram of a floating wind turbine according to an embodiment of the disclosure.

List of reference characters: 100 spoiler plate; 200 lifting and unfolding assembly; 201 first connecting rod; 202 second connecting rod; 203 first gear; 204 second gear; 300 column; 301 toothed belt; and 400 anchoring system.

### DETAILED DESCRIPTION OF THE EMBODIMENTS

In view of this, the core of this disclosure is to provide a floating column spoiler structure to improve the stability of floating wind turbine.

In the following, the technical scheme in the embodiment of the disclosure will be clearly and completely described with reference to the attached drawings. Obviously, the described embodiment is only a part of the embodiment of the disclosure, but not all of the embodiments. Based on the embodiments in this disclosure, all other embodiments obtained by ordinary skilled in this field without creative efforts belong to the scope of protection in this disclosure.

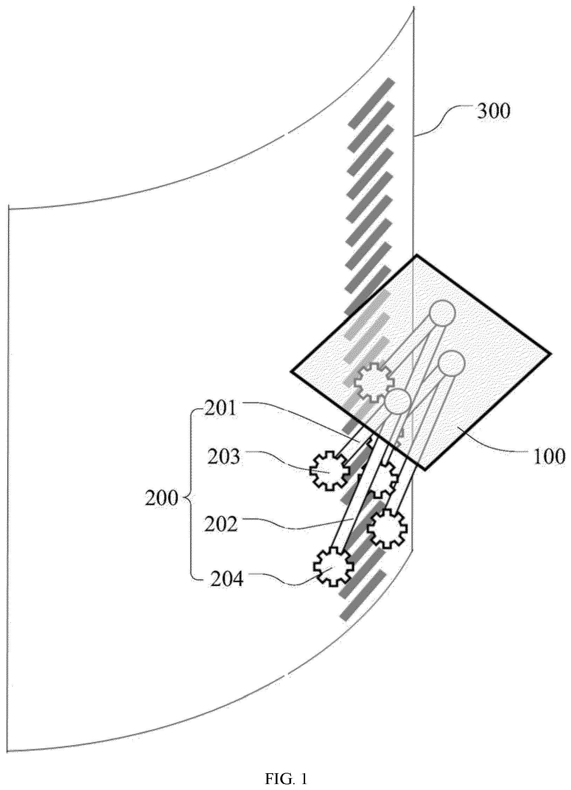

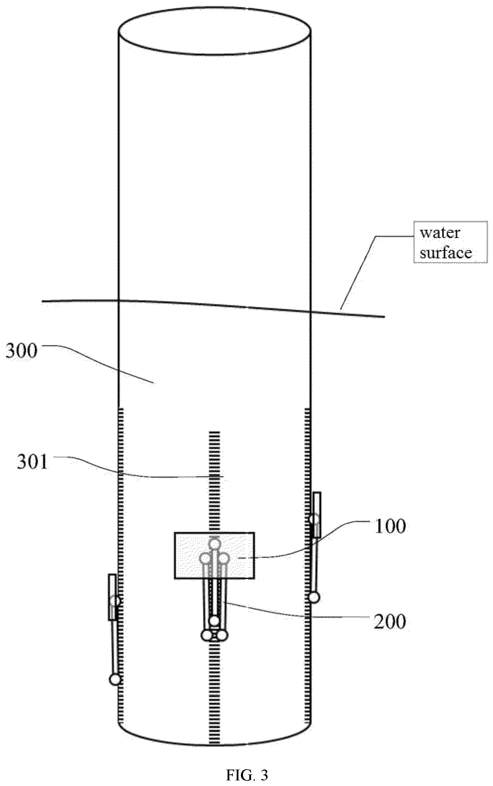

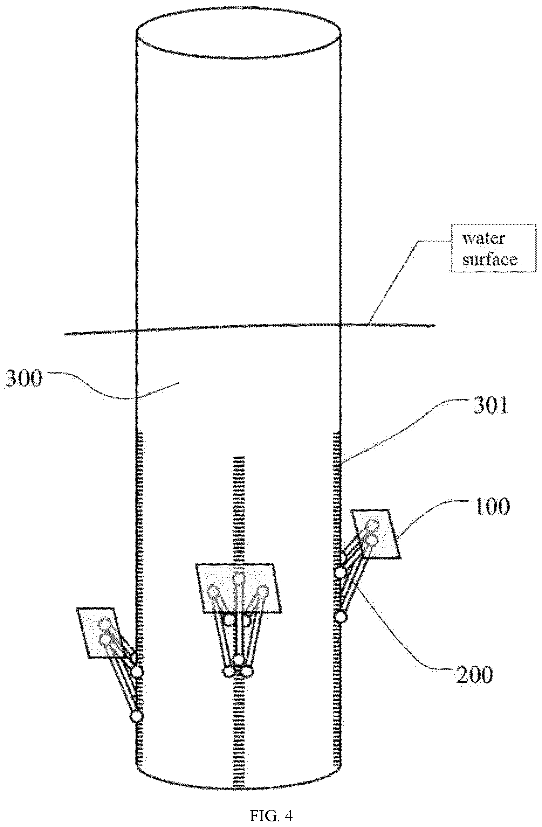

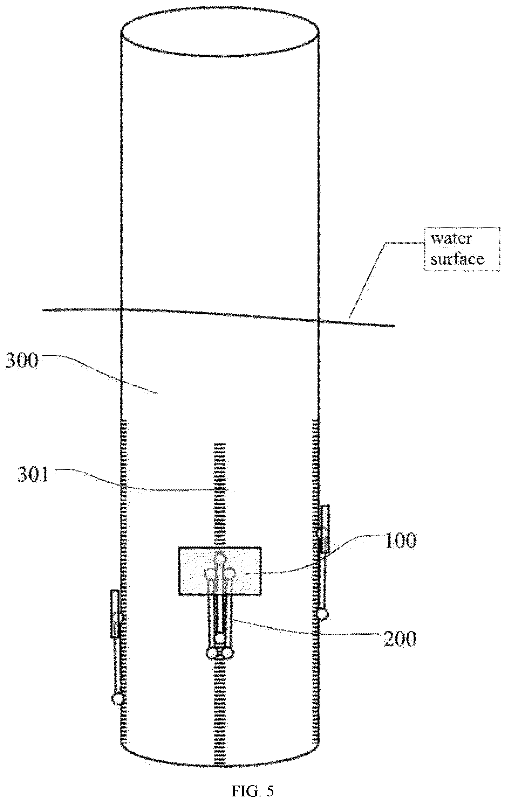

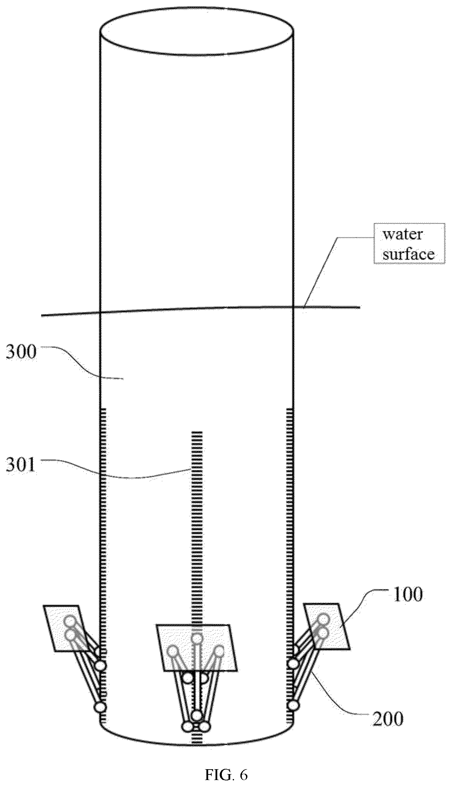

As shown in FIGs. 1 to 9, an embodiment of the disclosure discloses a floating column spoiler structure, which includes spoiler plates 100 and lifting and unfolding assemblies 200.

Among them, multiple spoiler plates 100 is provided, and the lifting and unfolding assembly 200 connects the spoiler plate 100 and the column 300. The lifting and unfolding assembly 200 includes a first connecting rod 201, a second connecting rod 202, a first gear 203 and a second gear 204, and the first end of the first connecting rod 201 is rotatably connected with the first end of the second connecting rod 202, and the spoiler plate 100 is arranged at the first end of the first connecting rod 201 and the first end of the second connecting rod 202. The second end of the first connecting rod 201 is rotatably connected with the first gear 203, and the second end of the second connecting rod 202 is rotatably connected with the second gear 204. The first gear 203 and the second gear 204 are sequentially arranged on the outer circumferential wall of the column 300 from top to bottom along the axial direction of the column 300, and the outer circumferential wall of the column 300 is provided with lifting gear teeth that can mesh with the first gear 203 and the second gear 204.

When the floating column spoiler structure provided by this disclosure is used, because the first end of the first connecting rod 201 and the first end of the second connecting rod 202 are rotatably connected, the second end of the first connecting rod 201 is rotatably connected with the first gear 203, and the second end of the second connecting rod 202 is rotatably connected with the second gear 204, the first gear 203 and the second gear 204 are sequentially arranged on the outer circumferential wall of the column 300 from top to bottom along the axial direction of the column 300, and the outer circumferential wall of the column 300 is provided with lifting gear teeth capable of meshing with the first gear 203 and the second gear 204; therefore, the distance between the first gear 203 and the second gear 204 can be adjusted by moving at least one of the first gear 203 and the second gear 204 along the axial direction of the column 300, so that the distance between the second end of the first connecting rod 201 and the second end of the second connecting rod 202 can be adjusted, so that the distance between the first end of the first connecting rod 201 and the first end of the second connecting rod 202 and the outer circumferential wall of the column 300 can be adjusted, and the distance between the spoiler plate 100 arranged at the first end of the first connecting rod 201 and the first end of the second connecting rod 202 and the outer circumferential wall of the column 300 can be increased or decreased. Therefore, the floating column spoiler structure provided by the disclosure has the following beneficial effects:
1. when the seawater velocity is high, at least one of the first gear 203 and the second gear 204 is first moved to reduce the distance between the first end of the first connecting rod 201 and the first end of the second connecting rod 202 and the column 300, and the spoiler plate 300 is retracted, and then both the first gear 203 and the second gear 204 are raised along the lifting gear teeth, so that multiple spoiler plates 100 are raised to a preset spoiler position, and then at least one of the first gear 203 and the second gear 204 is moved. The distance between the first end of the first connecting rod 201 and the first end of the second connecting rod 202 and the outer circumferential wall of the column 300 is increased, so that the distance between the spoiler plate 100 and the outer circumferential wall of the column 300 is increased, and the unfolding function of the spoiler plate 100 is realized; the karman vortex bits around the column 300 are reduced through multiple unfolded spoiler plates 100, so that the vortex-induced vibration of the column 300 is reduced, thereby reducing the inclination angle, the rolling angle and the pitching angle of the floating wind turbine, improving the stability of the floating wind turbine and enabling the power of the floating wind turbine to be stably output;
2. when the wind and waves are heavy, firstly, by moving at least one of the first gear 203 and the second gear 204, the distances between the first end of the first connecting rod 201 and the first end of the second connecting rod 202 and the column 300 are reduced, and the spoiler plates 100 are retracted; then, both the first gear 203 and the second gear 204 are lowered along the lifting gear teeth, so that multiple spoiler plates 100 are lowered to preset sagging positions, and the center of gravity of the floating column is lowered, so that the center of gravity of the whole floating platform is lowered; and then, at least one of the first gear 203 and the second gear 204 is moved, the distance between the first end of the first connecting rod 201 and the first end of the second connecting rod 202 and the outer circumferential wall of the column 300 is increased, so that the distance between the spoiler plate 100 and the outer circumferential wall of the column 300 is increased, the spoiler plate 100 is unfolded at a preset sagging position, the damping of the floating column is increased, the stability of the whole floating wind turbine is improved, and the power of the floating wind turbine is stably output;
3. when in a calm sea, at least one of the first gear 203 and the second gear 204 is moved to reduce the distance between the first end of the first connecting rod 201 and the first end of the second connecting rod 202 and the outer circumferential wall of the column 300, thereby reducing the distance between the spoiler plate 100 and the outer circumferential wall of the column 300, and the spoiler plate 100 is retracted to reduce the hydrodynamic force.

It should be understood that the first connecting rod, the second connecting rod and the column section between the first gear 203 and the second gear 204 form a triangular structure, and the height of the triangular structure is the distance between the spoiler plate 100 and the column 300 if the column section between the first gear 203 and the second gear 204 is the bottom of the triangular structure. When the triangular structure is a right triangle, the distance between the spoiler 100 and the column 300 is the largest; when the triangular structure is an obtuse triangle, increasing the distance between the first gear 203 and the second gear 204 can increase the distance between the spoiler plate 100 and the column 300; when the triangular structure is an acute triangle, reducing the distance between the first gear 203 and the second gear 204 can increase the distance between the spoiler plate 100 and the column 300. Therefore, when the spoiler 100 needs to be unfolded, the distance between the first gear 203 and the second gear 204 can be increased, or the distance between the first gear 203 and the second gear 204 can be decreased, as long as the spoiler plate 100 can be unfolded.

In addition, the spoiler plate 100 can be fixedly arranged at the first end of the first connecting rod 201 and the first end of the second connecting rod 202 by means of bolt connection or rivet connection, and can also be rotatably arranged at the first end of the first connecting rod 201 and the first end of the second connecting rod 202 by means of universal joint bearing or ball hinge, so long as the connection mode can meet the use requirements, it is within the protection scope of the disclosure. Optionally, the spoiler plate 100 provided by the embodiment of the disclosure is rotatably arranged at the first end of the first connecting rod 201 and the first end of the second connecting rod 202, so that when the spoiler 100 is retracted, the spoiler plate 100 can be rotated to be attached to the outer circumferential wall of the column 300, and when the spoiler 100 is unfolded, the spoiler plate 100 can be rotated to form a preset inclination angle with the horizontal plane, so that the angle adjustment of the spoiler plate 100 is more flexible.

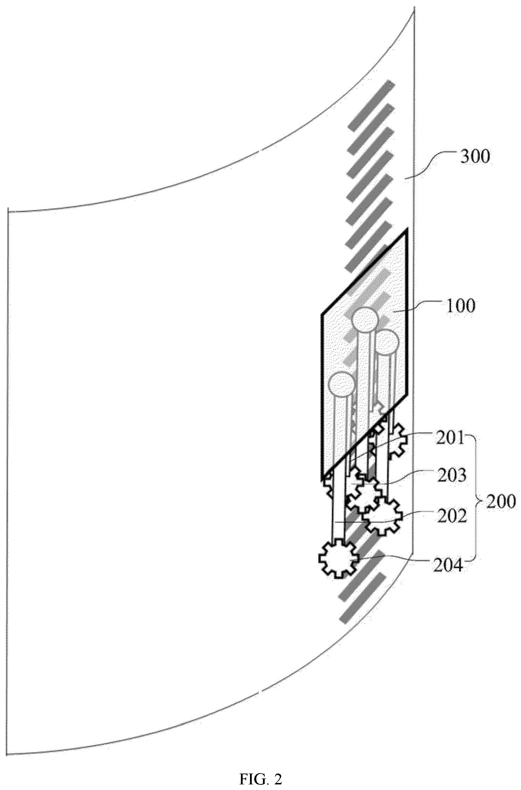

As shown in FIGs. 1 and 2, the first end of the first connecting rod 201 and the first end of the second connecting rod 202 are connected by a ball hinge to realize the rotational connection between the first end of the first connecting rod 201 and the first end of the second connecting rod 202, which is convenient for adjusting the distance between the second end of the first connecting rod 201 and the second end of the second connecting rod 202, thus realizing the unfolding and retraction of the spoiler plate 100.

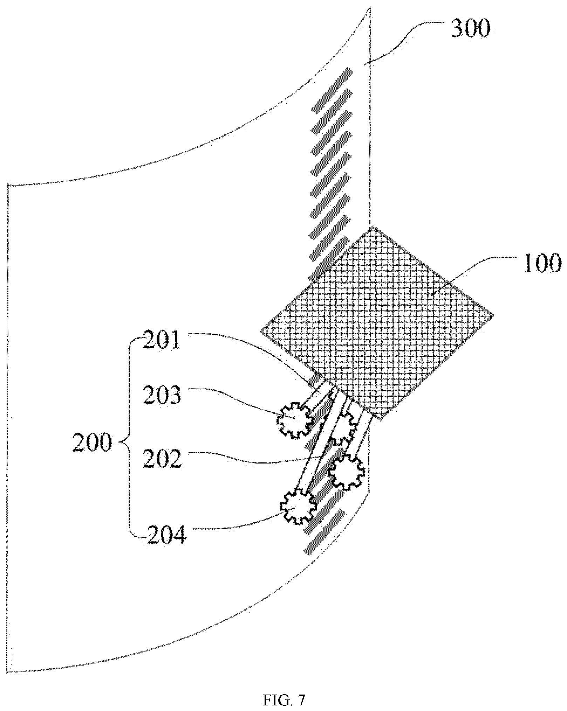

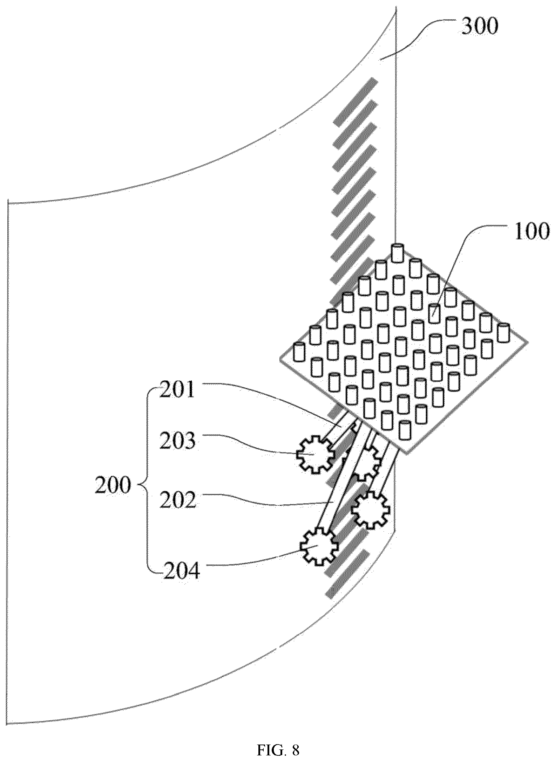

It should be noted that the spoiler plate 100 can be a spoiler net, a plate with spoiler nails, a spoiler plate with spoiler blades, etc., as long as it is a structural that can meet the spoiler requirements, it belongs to the protection scope of the disclosure. Optionally, as shown in FIG. 7, in one embodiment of the disclosure, the spoiler plate 100 is a spoiler net to play a spoiler role through the mesh of the spoiler net. As shown in FIG. 8, in another embodiment of the disclosure, the spoiler plate 100 includes a spoiler plate body and spoiler nails arranged on the spoiler plate body to play a spoiler role through the raised spoiler nails.

In a specific embodiment of the disclosure, a number of the lifting and unfolding assemblies 200 corresponding to each of the spoiler plates 100 is three, and the lifting and unfolding assemblies 200 includes a first lifting and unfolding assembly, a second lifting and unfolding assembly and a third lifting and unfolding assembly, and connection positions of the first lifting and unfolding assembly, the second lifting and unfolding assembly and the third lifting and unfolding assembly with corresponding one of the spoiler plates 100 are distributed in a triangle shape, so as to form a triangular support structure for the spoiler plate 100 and improve the stability of the spoiler plate 100.

In addition, the lifting gear teeth can be directly arranged on the outer circumferential wall of the column 300, that is, the lifting gear teeth and the column 300 have an integrated structure. Alternatively, the outer circumferential wall of the column 300 is provided with toothed belts 301, and the lifting gear teeth are located on the toothed belts 301, that is, the column 300 and the toothed belts with a split structure are all within the protection scope of the disclosure as long as they can meet the use requirements.

Further, the first gear 203 and the second gear 204 are respectively arranged on the outer circumferential wall of the column 300 through the first gear 203 mounting piece and the second gear 204 mounting piece, and the first gear 203 mounting piece and the second gear 204 mounting piece are slidably connected to the outer circumferential wall of the column 300, so that the first gear 203 and the second gear 204 can be meshed and rolled on the lifting gear teeth, thereby adjusting and enabling the spoiler plate 100 to be lifted, unfolded and retracted.

In addition, the floating column turbulence structure provided by the disclosure also includes a central control system, a water body flow velocity monitoring system and a wind and wave environment monitoring system, as well as a first pushing piece for pushing the second end of the first connecting rod 201 to lift and a second pushing piece for pushing the second end of the second connecting rod 202 to lift, where the central control system is capable of transmitting signals with the water body flow velocity monitoring system, the wind and wave environment monitoring system, the first pushing piece and the second pushing piece. Seawater flow velocity information is monitored (including factors such as water flow velocity and direction) through a water body flow velocity monitoring system, and wave condition information is monitored (including factors such as wave height, period and wavelength) through a wind and wave environment monitoring system. After receiving seawater flow velocity information and wave condition information, the central control system estimates the movement situation of the floating column, and controls the first pushing piece and the second pushing piece to perform the pushing action according to the estimated movement situation of the floating column. The first pushing piece and the second pushing piece push the first connecting rod 201 and the second connecting rod 202 respectively, so that the height of the spoiler plate 100 can be adjusted and the state of the spoiler plate 100 can be switched between unfolding and retraction, so that the floating column spoiler structure can actively adjust the height and state of the spoiler plate 100 according to the water body flow rate and wind and wave environment, better reduce the vortex-induced vibration phenomenon, and improve the suppression effect on the rolling and pitching of the floating wind turbine, thereby improving the stability of the floating wind turbine and ensuring the stability of the floating wind turbine.

The signal transmission mode between the central control system, the water body flow velocity monitoring system, the wind and wave environment monitoring system, the first pushing piece and the second pushing piece can be wired transmission or wireless transmission, as long as it can meet the signal transmission requirements, it belongs to the protection scope of the disclosure.

In addition, the disclosure also provides a floating column and a floating wind turbine, both of which include the floating column spoiler structure, so that all the technical effects of the floating column spoiler structure are achieved, and the details are not repeated here.

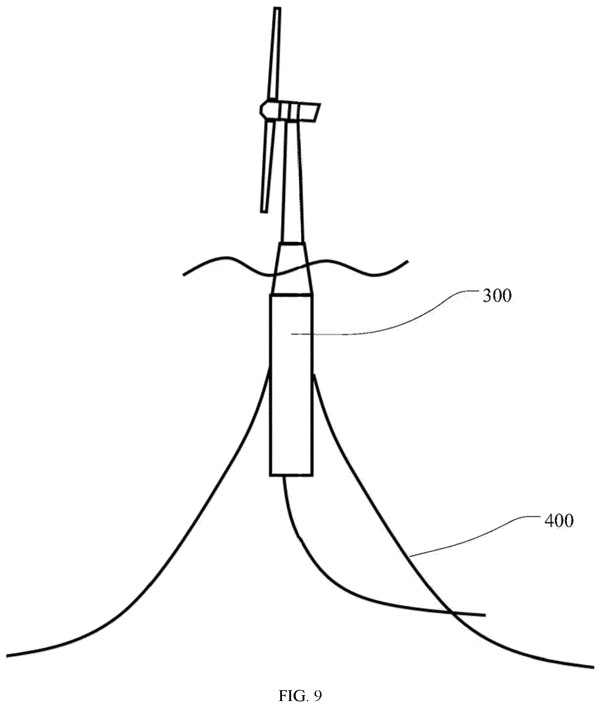

In the floating wind turbine shown in FIG. 9, the anchor chain of the anchoring system 400 fixes the column 300 on the seabed to realize the positioning and fixing of the floating wind turbine, and the floating wind turbine is set in a preset sea area to generate electricity through offshore wind energy.

The terms "first" and "second" in the description and claims of the disclosure and the above drawings are used to distinguish different objects, not to describe a specific order. Furthermore, the terms "including" and "have" and any variations thereof are intended to cover non-exclusive inclusion. For example, a process, method, system, product or equipment that includes a series of steps or units is not set in the listed steps or units, but may include steps or units that are not listed.

The above description of the disclosed embodiments enables those skilled in the art to make or use the disclosure. Many modifications to these embodiments will be obvious to those skilled in the art, and the general principles defined herein can be implemented in other embodiments without departing from the scope of protection as defined by the appended claims. Therefore, the disclosure is not to be limited to the embodiments shown herein, but is to be accorded the widest scope consistent with the appended claims.

## Claims

1. A spoiler structure for a floating column, comprising:
a plurality of spoiler plates (100);
lifting and unfolding assemblies (200) suitable to connect each of the spoiler plates (100) and a column (300); wherein each of the lifting and unfolding assemblies (200) comprises a first connecting rod (201);
and **characterized in that**:
each of the lifting and unfolding assemblies (200) further comprises a second connecting rod (202), a first gear (203) and a second gear (204); wherein a first end of the first connecting rod (201) is rotatably connected with a first end of the second connecting rod (202), and each of the spoiler plates (100) is arranged at the first end of the first connecting rod (201) and the first end of the second connecting rod (202); wherein a second end of the first connecting rod (201) is rotatably connected with the first gear (203), and a second end of the second connecting rod (202) is rotatably connected with the second gear (203); wherein the first gear (203) and the second gear (204) are suitable to be sequentially arranged on an outer circumferential wall of the column (300) from top to bottom along an axial direction of the column (300), and wherein the structure further comprises lifting gear teeth suitable to be provided on the outer circumferential wall of the column (300) and capable of meshing with the first gear (203) and the second gear (204).

2. The spoiler structure for a floating column according to claim 1, wherein each of the spoiler plates (100) is rotatably arranged at the first end of the first connecting rod (201) and the first end of the second connecting rod (202).

3. The spoiler structure for a floating column according to claim 1, wherein the first end of the first connecting rod (201) and the first end of the second connecting rod (202) are connected by a ball hinge.

4. The spoiler structure for a floating column according to claim 1, wherein each of the spoiler plates (100) comprises spoiler nets or spoiler nails.

5. The spoiler structure for a floating column according to claim 1, wherein a number of the lifting and unfolding assemblies (200) corresponding to each of the spoiler plates (100) is three, and the lifting and unfolding assemblies (200) comprises a first lifting and unfolding assembly, a second lifting and unfolding assembly and a third lifting and unfolding assembly, and connection positions of the first lifting and unfolding assembly, the second lifting and unfolding assembly and the third lifting and unfolding assembly with corresponding one of the spoiler plates (100) are distributed in a triangle shape.

6. The spoiler structure for a floating column according to claim 1, wherein the lifting gear teeth are directly arranged on the outer circumferential wall of the column (300), or toothed belts (301) are arranged on the outer circumferential wall of the column (300), and the lifting gear teeth are located on the toothed belts (301).

7. The spoiler structure for a floating column according to claim 1, wherein the first gear (203) and the second gear (204) are respectively arranged on the outer circumferential wall of the column (300) through a first gear mounting piece and a second gear mounting piece, and the first gear mounting piece and the second gear mounting piece are slidably connected to the outer circumferential wall of the column (300).

8. The spoiler structure for a floating column according to claim 1, further comprising a central control system, a water body flow velocity monitoring system and a wind and wave environment monitoring system, as well as a first pushing piece for pushing the second end of the first connecting rod (201) to lift and a second pushing piece for pushing the second end of the second connecting rod (202) to lift, wherein the central control system is capable of transmitting signals with the water body flow velocity monitoring system, the wind and wave environment monitoring system, the first pushing piece and the second pushing piece.

9. A floating column, comprising a spoiler structure for a floating column according to any one of claims 1-8.

10. A floating wind turbine, comprising a spoiler structure for a floating column according to any one of claims 1-8.

## Patentansprüche

1. Eine turbulente Strömungsstruktur einer schwimmenden Standsäule, umfassend:
eine Vielzahl von Turbulenzplatten (100);
Hebe- und Entfaltungsanordnungen (200), die geeignet sind, jede der Turbulenzplatten (100) und eine Säule (300) zu verbinden; wobei jede der Hebe- und Entfaltungsanordnungen (200) eine erste Verbindungsstange (201) umfasst;
und **dadurch gekennzeichnet, dass**:
jede der Hebe- und Entfaltungsanordnungen (200) ferner eine zweite Verbindungsstange (202), ein erstes Zahnrad (203) und ein zweites Zahnrad (204) umfasst; wobei ein erstes Ende der ersten Verbindungsstange (201) drehbar mit einem ersten Ende der zweiten Verbindungsstange (202) verbunden ist, und jede der Turbulenzplatten (100) an dem ersten Ende der ersten Verbindungsstange (201) und dem ersten Ende der zweiten Verbindungsstange (202) angeordnet ist; wobei ein zweites Ende der ersten Verbindungsstange (201) drehbar mit dem ersten Zahnrad (203) verbunden ist, und ein zweites Ende der zweiten Verbindungsstange (202) drehbar mit dem zweiten Zahnrad (204) verbunden ist; wobei das erste Zahnrad (203) und das zweite Zahnrad (204) geeignet sind, um aufeinanderfolgend an einer Außenumfangswand der Säule (300) von oben nach unten entlang einer axialen Richtung der Säule (300) angeordnet zu werden, und wobei die Struktur ferner Hebezahnradzähne umfasst, die geeignet sind, an der Außenumfangswand der Säule (300) bereitgestellt zu werden, und die in der Lage sind, mit dem ersten Zahnrad (203) und dem zweiten Zahnrad (204) zu kämmen.

2. Die turbulente Strömungsstruktur einer schwimmenden Standsäule nach Anspruch 1, wobei jede der Turbulenzplatten (100) drehbar an dem ersten Ende der ersten Verbindungsstange (201) und dem ersten Ende der zweiten Verbindungsstange (202) angeordnet ist.

3. Die turbulente Strömungsstruktur einer schwimmenden Standsäule nach Anspruch 1, wobei das erste Ende der ersten Verbindungsstange (201) und das erste Ende der zweiten Verbindungsstange (202) durch ein Kugelgelenk verbunden sind.

4. Die turbulente Strömungsstruktur einer schwimmenden Standsäule nach Anspruch 1, wobei jede der Turbulenzplatten (100) Turbulenznetze oder Turbulenznägel umfasst.

5. Die turbulente Strömungsstruktur einer schwimmenden Standsäule nach Anspruch 1, wobei eine Anzahl der Hebe- und Entfaltungsanordnungen (200), die jeder der Turbulenzplatten (100) entspricht, drei beträgt, und die Hebe- und Entfaltungsanordnungen (200) eine erste Hebe- und Entfaltungsanordnung, eine zweite Hebe- und Entfaltungsanordnung und eine dritte Hebe- und Entfaltungsanordnung umfassen, und Verbindungspositionen der ersten Hebe- und Entfaltungsanordnung, der zweiten Hebe- und Entfaltungsanordnung und der dritten Hebe- und Entfaltungsanordnung mit einer entsprechenden der Turbulenzplatten (100) in einer Dreiecksform verteilt sind.

6. Die turbulente Strömungsstruktur einer schwimmenden Standsäule nach Anspruch 1, wobei die Hebezahnradzähne direkt an der Außenumfangswand der Säule (300) angeordnet sind, oder Zahnriemen (301) an der Außenumfangswand der Säule (300) angeordnet sind und die Hebezahnradzähne auf den Zahnriemen (301) liegen.

7. Die turbulente Strömungsstruktur einer schwimmenden Standsäule nach Anspruch 1, wobei das erste Zahnrad (203) und das zweite Zahnrad (204) jeweils über ein erstes Zahnradmontagestück und ein zweites Zahnradmontagestück an der Außenumfangswand der Säule (300) angeordnet sind, und das erste Zahnradmontagestück und das zweite Zahnradmontagestück verschiebbar mit der Außenumfangswand der Säule (300) verbunden sind.

8. Die turbulente Strömungsstruktur einer schwimmenden Standsäule nach Anspruch 1, ferner umfassend ein zentrales Steuersystem, ein Überwachungssystem für die Strömungsgeschwindigkeit des Gewässers und ein Überwachungssystem für die Wind- und Wellenumgebung, sowie ein erstes Schiebestück zum Schieben des zweiten Endes der ersten Verbindungsstange (201) zum Anheben und ein zweites Schiebestück zum Schieben des zweiten Endes der zweiten Verbindungsstange (202) zum Anheben, wobei das zentrale Steuersystem in der Lage ist, Signale mit dem Überwachungssystem für die Strömungsgeschwindigkeit des Gewässers, dem Überwachungssystem für die Wind- und Wellenumgebung, dem ersten Schiebestück und dem zweiten Schiebestück zu übertragen.

9. Eine schwimmende Standsäule, umfassend eine turbulente Strömungsstruktur einer schwimmenden Standsäule nach einem der Ansprüche 1-8.

10. Ein schwimmender Lüfter, umfassend eine turbulente Strömungsstruktur einer schwimmenden Standsäule nach einem der Ansprüche 1-8.

## Revendications

1. Une structure d'écoulement turbulent pour une colonne de support de type flottant, comprenant:
une pluralité de plaques de turbulence (100);
des ensembles de levage et de déploiement (200) adaptés pour relier chacune des plaques de turbulence (100) et une colonne (300); dans laquelle chacun des ensembles de levage et de déploiement (200) comprend une première tige de liaison (201);
et **caractérisée en ce que**:
chacun des ensembles de levage et de déploiement (200) comprend en outre une seconde tige de liaison (202), un premier engrenage (203) et un second engrenage (204); dans laquelle une première extrémité de la première tige de liaison (201) est reliée de manière rotative à une première extrémité de la seconde tige de liaison (202), et chacune des plaques de turbulence (100) est disposée au niveau de la première extrémité de la première tige de liaison (201) et de la première extrémité de la seconde tige de liaison (202); dans laquelle une seconde extrémité de la première tige de liaison (201) est reliée de manière rotative avec le premier engrenage (203), et une seconde extrémité de la seconde tige de liaison (202) est reliée de manière rotative avec le second engrenage (204); dans laquelle le premier engrenage (203) et le second engrenage (204) sont adaptés pour être disposés séquentiellement sur une paroi circonférentielle extérieure de la colonne (300) de haut en bas le long d'une direction axiale de la colonne (300), et dans laquelle la structure comprend en outre des dents d'engrenage de levage adaptées pour être prévues sur la paroi circonférentielle extérieure de la colonne (300) et capables de s'engrener avec le premier engrenage (203) et le second engrenage (204).

2. La structure d'écoulement turbulent pour une colonne de support de type flottant selon la revendication 1, dans laquelle chacune des plaques de turbulence (100) est disposée de manière rotative à la première extrémité de la première tige de liaison (201) et à la première extrémité de la seconde tige de liaison (202).

3. La structure d'écoulement turbulent pour une colonne de support de type flottant selon la revendication 1, dans laquelle la première extrémité de la première tige de liaison (201) et la première extrémité de la seconde tige de liaison (202) sont reliées par une rotule.

4. La structure d'écoulement turbulent pour une colonne de support de type flottant selon la revendication 1, dans laquelle chacune des plaques de turbulence (100) comprend des filets de turbulence ou des clous de turbulence.

5. La structure d'écoulement turbulent pour une colonne de support de type flottant selon la revendication 1, dans laquelle un nombre des ensembles de levage et de déploiement (200) correspondant à chacune des plaques de turbulence (100) est de trois, et les ensembles de levage et de déploiement (200) comprennent un premier ensemble de levage et de déploiement, un deuxième ensemble de levage et de déploiement et un troisième ensemble de levage et de déploiement, et les positions de connexion du premier ensemble de levage et de déploiement, du deuxième ensemble de levage et de déploiement et du troisième ensemble de levage et de déploiement avec l'une correspondante des plaques de turbulence (100) sont réparties selon une forme triangulaire.

6. La structure d'écoulement turbulent pour une colonne de support de type flottant selon la revendication 1, dans laquelle les dents d'engrenage de levage sont directement disposées sur la paroi circonférentielle extérieure de la colonne (300), ou des ceintures dentées (301) sont disposées sur la paroi circonférentielle extérieure de la colonne (300), et les dents d'engrenage de levage sont situées sur les ceintures dentées (301).

7. La structure d'écoulement turbulent pour une colonne de support de type flottant selon la revendication 1, dans laquelle le premier engrenage (203) et le second engrenage (204) sont respectivement disposés sur la paroi circonférentielle extérieure de la colonne (300) par l'intermédiaire d'une première pièce de montage d'engrenage et d'une seconde pièce de montage d'engrenage, et la première pièce de montage d'engrenage et la seconde pièce de montage d'engrenage sont reliées de manière coulissante à la paroi circonférentielle extérieure de la colonne (300).

8. La structure d'écoulement turbulent pour une colonne de support de type flottant selon la revendication 1, comprenant en outre un système de commande central, un système de surveillance de la vitesse d'écoulement de la masse d'eau et un système de surveillance de l'environnement de vent et de vagues, ainsi qu'une première pièce de poussée pour pousser la seconde extrémité de la première tige de liaison (201) pour le levage et une seconde pièce de poussée pour pousser la seconde extrémité de la seconde tige de liaison (202) pour le levage, dans laquelle le système de commande central est capable de transmettre des signaux avec le système de surveillance de la vitesse d'écoulement de la masse d'eau, le système de surveillance de l'environnement de vent et de vagues, la première pièce de poussée et la seconde pièce de poussée.

9. Une colonne de support de type flottant, comprenant une structure d'écoulement turbulent pour une colonne de support de type flottant selon l'une quelconque des revendications 1 à 8.

10. Un ventilateur de type flottant, comprenant une structure d'écoulement turbulent pour une colonne de support de type flottant selon l'une quelconque des revendications 1 à 8.
